# EUROPEAN PATENT SPECIFICATION

(11) **EP 3 515 019 B1**
(45) Date of publication and mention of the grant of the patent: **02.10.2024**
(21) Application number: 18206839.5
(22) Date of filing: 16.11.2018
(51) Int. Cl.: H04L 12/28, H02J 3/14

(54) **USER-ORIENTED ENERGY UTILIZATION INTEGRATED MANAGEMENT SYSTEM**
BENUTZERORIENTIERTES INTEGRIERTES VERWALTUNGSSYSTEM FÜR DIE ENERGIENUTZUNG
SYSTÈME DE GESTION INTÉGRÉ D'UTILISATION D'ÉNERGIE AXÉE SUR L'UTILISATEUR

(30) Priority: 18.01.2018 CN 201810048085
(43) Date of publication of application: 24.07.2019
(73) Proprietor: Goldcard Smart Group Co., Ltd., 325600 Wenzhou, Zhejiang (CN)
(72) Inventor: Ding, Yuanming, Hangzhou, Zhejiang 310018 (CN); Sheng, Chenglong, Hangzhou, Zhejiang 310018 (CN); Zhang, Jintao, Hangzhou, Zhejiang 310018 (CN); Lin, Zhimeng, Hangzhou, Zhejiang 310018 (CN); Wang, Dongxue, Hangzhou, Zhejiang 310018 (CN)
(74) Representative: 2s-ip Schramm Schneider Bertagnoll Patent- und Rechtsanwälte Part mbB

(56) References cited:
- US-A1- 2002 072 868
- US-A1- 2005 033 707
- US-A1- 2017 322 525

## Description

### FIELD

Embodiments of the present disclosure generally relate to the technical field of IoT (Internet of Things), and more particularly relates to a user-oriented energy utilization integrated management system.

### BACKGROUND

Rapid development of economy boosts constant growth of the total energy consumption amount. Conventional household energy consumptions, dominantly coal and electricity, produce relatively high pollutions with low energy utilization. With change of global climates and promotion of energy conservation and emissions reduction policies in various regions, the world is exploring a better energy consumption pattern to achieve clean energy utilization, energy conservation, and emissions reduction.

In recent years, coal-to-gas technologies have been popularized expeditiously, and the household energy consumption pattern is also turning into an electricity-gas energy interaction pattern from the conventional electricity energy supply. For example, electricity-dominated air-conditioner heating, coal burning-dominated steam heating, and gas burning-dominated furnace heating. Currently, a plurality of energy usage interaction patterns are seen in households. Conventional household energy consumption patterns cannot be subjected to data analysis of regarding energy usage, thereby having a drawback of blind energy usage. Moreover, with increase of household energy-using equipment, most families lack enough understanding of operations of the energy-use equipment and lack statistics on, analysis of, and comparison between various energy-consumption data, causing low energy utilization and high energy consumption. In view of the above, it is significant to implement big data and individualized analysis of the energy data of household users, strengthen monitoring and guidance on energy usage, improve household energy utilization, implement reasonable and economic energy usage, implement optimization and regulation of energy usage in household environment, and create an energy consumption pattern for a livable environment.

US2005/0033707 A1 relates to an energy utilization management system according to the preamble of claim 1.

### SUMMARY

To overcome the drawbacks of the prior art, an object of the present disclosure is to provide a user-oriented energy utilization integration management system, which may implement centralized management of household energy-using equipment, integrate functions of collecting and analyzing energy-using data, and realize reasonable distribution and efficient utilization of energy.

To solve the technical problem above, the present disclosure adopts a technical solution as defined in claim 1.

In the user-oriented energy utilization integrated management system, the control and management device comprises an energy-usage displaying module that displays energy-usage information collected by the energy metering device or displays household energy-usage data based on the analysis result of the background analysis master station.

In the user-oriented energy utilization integrated management system, the control and management device comprises a control module that controls a working mode of the energy-using equipment based on the analysis result of the background analysis master station.

In the user-oriented energy utilization integrated management system, the control and management device comprises an energy-usage switching module that switches energy input based on the analysis result of the background analysis master station.

In the user-oriented energy utilization integrated management system, a user household has a coal-energy input end, a gas-energy input end, and an electricity-energy input end, wherein the energy-usage switching modules selects the coal-energy input end based on the analysis result of the background analysis master station. The gas-energy input end and the electricity-energy input end are also used for energy input.

In the user-oriented energy utilization integrated management system, the control and management device comprises a gateway module that carries out data transmission between the user home LAN and the background analysis master station.

In the user-oriented energy utilization integrated management system, a communication between the energy-using equipment and the control and management device is established via one of a ZigBee communication module, a WM-Bus communication module, a home Wi-Fi, or the Bluetooth.

In the user-oriented energy utilization integrated management system, the gateway module transmits and receives data via GPRS, NB-IoT, or LoRa.

In the user-oriented energy utilization integrated management system, the energy-using equipment includes a distributed power generation device, an energy-storage device that stores energy, and an energy consumption device, wherein the energy-consumption device includes at least one of a TV set, an air-conditioner, a kitchen appliance, a washing machine, or a heating device, wherein the distributed power generation device or energy-storage device may directly supply energy for the energy-consumption device.

In the user-oriented energy utilization integrated management system, the energy metering device includes at least one of a gas meter, an electric energy meter, a heat energy meter, or a water meter.

In the user-oriented energy utilization integrated management system, the home LAN further comprises an extended device, the extended device at least including an on-board equipment.

The present disclosure has the following beneficial effects:

The user-oriented energy utilization integrated management system according to the present disclosure comprises: a user home LAN and a background analysis master station, wherein data interaction and transmission between the user home LAN and the background analysis master station are carried out via a remote transmission network; the user home LAN comprises a sensing device for data collection, energy-using equipment, an energy metering device, and a control and management device for controlling and managing household appliances; wherein the energy metering device performs collecting and metering of household energy-usage information; the control and management device is configured for regulating and controlling the energy-using equipment and transmitting the data information collected by the energy metering device to the background analysis master station; and the background analysis master station analyzes and integrates the data and returns an analysis result to the control and management device, such that the control and management device performs control and management of a plurality of energy-using equipment based on the analysis result of the background analysis master station.

Establishment of the home LAN may implement local network interconnection among various energy-using equipment, energy-metering devices, and sensing devices inside a household, which catches up with the development trend of IoT era of smart home and facilitates building of a smart home. The background analysis master station performs data analysis and integration and returns an analysis result to the control and management device. By getting the analysis result from the background analysis master station, the user may be recommended with an optimum energy consumption pattern, such that the user realizes a high efficiency energy utilization and achieves a maximum cost-effectiveness in energy consumption. The control and management device controls and manages the plurality of energy-using equipment based on the analysis result of the background analysis master station, which realizes energy-usage scheduling and optimized matching. The energy utilization integrated management system according to the present disclosure implements centralized management of household energy-using equipment; by integrating the functions of collecting and analyzing the energy-usage data, it achieves reasonable distribution and effective utilization of energy.

The control and management device comprises an energy-usage displaying module that displays energy-usage information collected by the energy metering device or displays household energy-usage data based on the analysis result of the background analysis master station. In the former case, the energy-usage displaying module displays the energy-usage information collected by the energy metering device, which realizes visualization of energy consumptions of household energy-using equipment, facilitates the user to understand energy usages of a plurality of energy-using equipment, and provides the user a more intuitive energy-usage data; in the latter case, it facilitates integrating of the data from the background analysis master station, may display the overall energy consumption of the household and recommend the best energy consumption pattern to the user, thereby optimizing of energy utilization.

The control and management device comprises a control module that may control the working mode of an energy-using equipment based on an analysis result of the background analysis master station to thereby achieve efficient utilization of the energy. By the control device, it can realize reasonable switching between energy peaks of each energy-using device and energy consumption patterns, which facilitates optimizing and upgrading of household energy consumption pattern to conserve energy and reduce carbon emissions.

The control and management device comprises an energy-usage switching module that switches energy input based on the analysis result of the background analysis master station. To optimize the use of energy input, especially for energy diversified households, we can choose more economical energy to maintain the stable operation of energy-using equipment according to actual energy demand.

The control and management device comprises a gateway module that carries out data transmission between the user home LAN and the background analysis master station. Compared with mutually independent single-wire remote transmissions of various energy metering devices in the prior art, the present solution may summarize the data from the plurality of energy metering devices to the gateway module, which then transmits the summarized data to the background analysis master station via a single wire, thereby implementing uniform transmission and management of multi-meter information. These characteristics and advantages of the present disclosure will be disclosed in detail in the preferred embodiments and the accompanying drawings below.

### BRIEF DESCRIPTION OF THE DRAWINGS

Hereinafter, the present disclosure will be described in further detail with reference to the accompanying drawings:

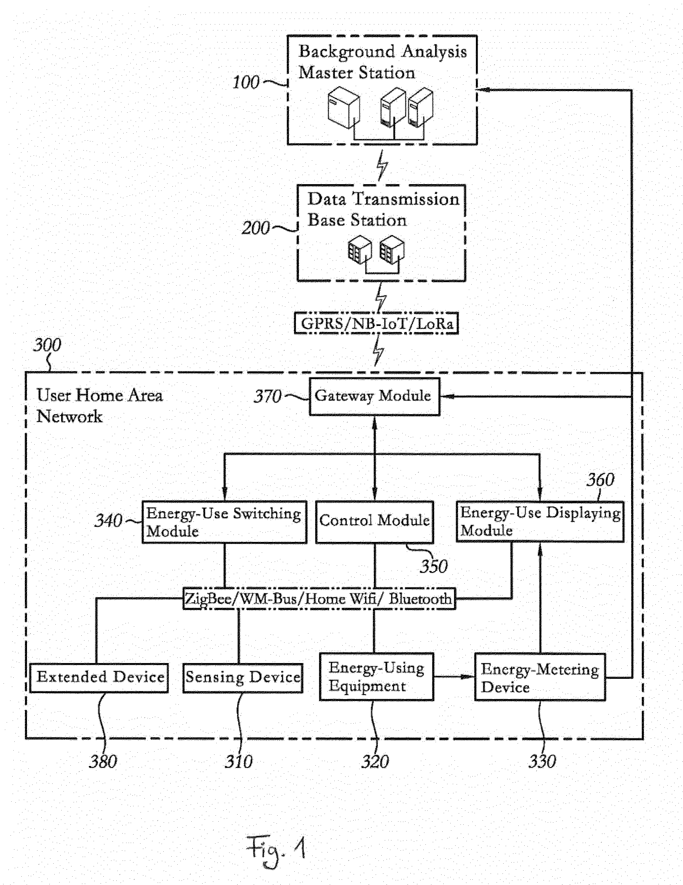

Fig. 1 shows a structural block diagram of an energy utilization integrated management system according to an embodiment of the present disclosure.

### Reference Numerals:

100 Background Analysis Master Station
200 Data Transmission Base Station
300 User Home LAN, 310 Sensing Device, 320 Energy-Using Equipment, 330 Energy Metering Device, 340 Energy-Usage Switching Module 350 Control Module 360 Energy-Usage Displaying Module 370 Gateway Module, 380 Extended Device

### DETAILED DESCRIPTION OF EMBODIMENTS

With reference to Fig. 1, a user-oriented energy utilization integrated management system according to an embodiment of the present disclosure comprises: a user home LAN 300 and a background analysis master station 100, wherein data interaction and transmission between the user home LAN 300 and the background analysis master station 100 are carried out via a remote transmission network; the user home LAN 300 comprises a sensing device 310 for data collection, energy-using equipment 320, an energy metering device 330, and a control and management device for controlling and managing household appliances; wherein the energy metering device 330 performs collecting and metering of household energy-usage information; the control and management device is configured for regulating and controlling the energy-using equipment 320 and transmitting the data information collected by the energy metering device 330 to the background analysis master station 100; and the background analysis master station 100 analyzes and integrates the data and returns an analysis result to the control and management device, such that the control and management device performs control and management of a plurality of energy-using equipment 320 based on the analysis result of the background analysis master station 100. Particularly, establishment of the home LAN 300 may implement local network interconnection among various energy-using equipment 320, so as to adapt to the development trend of smart home in the loT era and facilitate building of a smart home. The background analysis master station 100 performs data analysis and integration, mainly evaluating and analyzing the energy-usage data. The control and management device controls and manages the plurality of energy-using equipment 320 based on the analysis result of the background analysis master station 100, which realizes energy-usage scheduling and optimized matching. The energy utilization integrated management system according to the present disclosure implements centralized management of household energy-using equipment 320; by integrating the functions of collecting and analyzing the energy-usage data, it achieves reasonable distribution and effective utilization of energy.

The energy-using equipment 320 according to this embodiment includes, but not limited to, distributed power generation devices, energy storage devices for storing energy, and energy consumption devices, which are common in a household. The energy-consumption device may include at least one of a TV set, an air-conditioner, a kitchen appliance, a washing machine, or a heating device, wherein the distributed power generation device may be an electric boiler and/or a gas boiler; the energy-storage device is usually a battery accumulator. These distributed power generation devices or energy-storage device may directly supply energy for the energy-consumption device.

The energy metering device 330 in this embodiment includes a gas meter, an electricity meter, a heat meter, and a water meter, which may basically satisfy collection, monitoring, analysis, and diagnosis of energy consumptions of water, electricity, gas, heating, cooling of a user household, such that the established user home LAN 300 may implement centralized collection of energy-usage data such as gas-usage amount, electricity-usage amount, and water-usage amount, etc., within the household, thereby facilitating uniform management of the energy-usage data.

The sensing device 310 in this embodiment includes, but not limited to, a temperature sensor, a humidity sensor, an indoor air monitor, etc., which are arranged in a household to separately collect temperature, humidity, air pollution level, etc. of the household environment; these collected data are transmitted to the background analysis master station 100 for analysis and integration, and then fed back to the user home LAN 300; the control and management device controls and manages a corresponding energy-using equipment 320 based on the analysis result of the background analysis master station 100 so as to make an adaptive adjustment based on the temperature and humidity of the indoor environment, e.g., turning on/off an air conditioner, and adjusting the air-conditioner temperature, etc.

The background analysis master station 100 in this embodiment includes various types of database servers and application servers, etc.; with an AI technology, it may implement big data analysis and integration of the household energy-usage data and meanwhile transmits an analysis result to the user home LAN 300, thereby implementing control and management of the energy-using equipment 320 by means of the control and management device. The remote transmission network in this embodiment is a data transmission base station, via which data interaction and transmission between the user home LAN 300 and the background analysis master station 100 are performed. For example, the data information collected by the control and management device is transmitted to the background analysis master station 100 via the data transmission base station. It should be understood that the remote transmission network is not limited to the data transmission base station; other existing remote communication technologies may be adopted, e.g., GPRS via which the user home LAN 300 communicates with the background analysis master station 100.

The control and management device includes an energy-usage displaying module 360, a control module 350, an energy-use switching module 340, and a gateway module 370, wherein:
the energy-usage displaying module 360 displays the energy-usage information collected by the energy metering device 330. The energy-usage information here mainly refers to an energy consumption amount of a same kind of energy in the household. With the electricity meter as an example, it collects respective electricity consumption amounts of a plurality of energy consumption equipment and displays them through the energy-usage displaying module 360, thereby realizing energy consumption visualization of the household energy-using equipment 320, which facilitates the user to understand in real time energy usages of a plurality of energy-using equipment and presents the user more intuitive energy-usage consumption data. In addition, the energy-usage displaying module 360 may also display the household energy-usage data based on the analysis result of the background analysis master station 100, e.g., displaying the overall energy consumption amount of the household and recommending an optimal energy consumption pattern to the user, which optimizes energy utilization.

The control module 350 may control the working mode of an energy-using equipment 320 based on an analysis result of the background analysis master station. By the control device 350, it can realize reasonable switching between energy peaks of each energy-using device and energy consumption patterns, which facilitates optimizing and upgrading of household energy consumption pattern to conserve energy and reduce carbon emissions. For example, for an electricity-using equipment with a relatively large electricity consumption, the control module 350 may control it to start at night, thereby practicing a valley electricity price and saving costs. For another example, defrost mode of a refrigerator consumes more energy than other operation modes; then the control module 350 may control the refrigerator to start the defrost mode at night, thereby reducing the electricity-usage costs.

The energy-usage switching module 340 switches energy input based on the analysis result of the background analysis master station 100. To optimize the use of energy input, especially for energy diversified households, we can choose more economical energy to maintain the stable operation 320 of energy-using equipment according to actual energy demand. The energy diversified household usually has a coal-energy input end, a gas-energy input end, and an electricity-energy input end, wherein the energy-usage switching module 340 selects one of the coal-energy input end, the gas-energy input end, or the electricity-energy input end to perform energy input based on the analysis result of the background analysis master station 100. For example, for a household heating device, it may adopt a coal-fired energy or gas energy; in the case of coal-fired energy usage peak, it may be switched to gas energy input, thereby reducing carbon emissions and protecting the environment.

The communication between the energy-using equipment 320 and the control and management device is established via one of a ZigBee communication module, a WM-Bus communication module, a home Wi-Fi, or the Bluetooth. For example, a wireless communication between an air-conditioner and the control module 350 is carried out via the home Wi-Fi to regulate the cooling/heating mode of the air-conditioner. Communication between the control module 350 and the sensing device 310 may also be established via the ZigBee communication module, the WM-Bus communication module, the home WiFi, or the Bluetooth. For example, a wireless communication between the control module 350 and the temperature sensor is carried out via the Bluetooth, where the temperature sensor transmits the collected temperature information to the control module 350, and the control module 350 controls on/off of the air-conditioner or sets an air-conditioner temperature based on the temperature information.

By cooperation between the control module 350 and the energy-usage switching module 340 to implement, reasonable switching and optimization can be implemented among various energy sources in the user household; by switching and adjusting the optimum energy supply mode based on the energy-usage demand and energy-usage peak, load matching of the energy supply network is realized, which reduces carbon emissions and implements an optimal consumption pattern. It is significantly meaningful to promote the user's energy utilization awareness.

The gateway module 370 is configured for performing data transmission between the user home LAN 300 and the background analysis master station 100, e.g., in the user home LAN 300, metering information of a plurality of energy metering devices 330 is summarized to the gateway module 370, which then transmits them in single wire to the data transmission base station or the background analysis master station 100. Compared with the existing independent single line energy remote transmission of various energy metering devices, the solution can aggregate the data of multiple energy metering devices into the gateway module 370, and then the gateway module transmits the data to the background analysis master station in the single line, thereby implementing uniform transmission and management of multi-meter information. It should be understood that the energy metering device 330 may also separately perform remote communication with the background analysis master station 100, e.g., the gas meter, the electricity meter, and the water meter separately perform single-wire transmission with the background analysis master station 100. Preferably, the gateway module 370 in this embodiment transmits and receives data via GPRS, NB-IoT or Lora.

With the household duel fuel energy-using equipment 320 (e.g., a dual fuel stove, a dual fuel steam box, etc.) as an example, energy-usage management is performed by the energy utilization comprehensive management system in this embodiment in the manner below:
establishing a local LAN among the gas meter, the electricity meter, and other energy-using equipment 320; establishing a communication between the gas meter/electricity meter and the gateway module 370 in the control and management device via a ZigBee communication module or a WM-Bus communication module; uniformly summarizing the collected household gas-usage amount and electricity-usage amount to the gateway module 370, which then transmits the summarized gas-usage amount and electricity-usage amount in single-wire to the background analysis master station 100;

The background analysis master station 100 analyzes and integrates the gas-usage amount and electricity-usage amount and feeds back the analysis result to the control and management device;

In the control and management device, the energy-usage displaying module 360 displays the gas-usage amount and the electricity-usage amount based on an analysis result of the background analysis master station 100, which facilitates the user to understand, in real time, energy usages of the electricity and gas in the household. By energy-usage comparison based on these energy-usage data, big data analysis is realized;

In the control and management device, the energy-usage switching module 340 selects gas energy input or electricity energy input based on the analysis result of the background analysis master station 100. For example, the duel fuel equipment switches to the gas mode in the electricity-usage peak to avoid the electricity-usage peak, thereby reducing energy usage costs.

If the household energy-using equipment has a distributed power generation device and an energy storage device, the energy-usage management is performed adopting the present energy utilization integrated management system in the following manner: activating the energy storage device to supply electricity to the electricity-using equipment at daytime; at night when valley electricity price is practiced, activating the grid to charge the energy storage device, such that the energy storage device supplies power to the electricity-using device on the next day; in this way, the electricity usage is more economical with a reduced electricity-usage cost; meanwhile, for a dual fuel distributed power generation device including an electric boiler and a gas boiler, it may be set that the gas boiler stops working when reaching a certain gas usage amount and then switches to the electric boiler, thereby saving gas.

To extend the application scope of the energy utilization comprehensive management system, an extended device 380 may also be accessed to the user home LAN 300. The extended device 380 at least includes an in-vehicle device, such as a battery for an electric car, an in-vehicle air cleaner, an in-vehicle refrigerator, etc., thereby realizing comprehensive management of the household energy-usage.

The energy utilization comprehensive management system according to the embodiment of the present disclosure not only realizes collection, remote transmission, and feedback of the energy-usage data, but also enables remote meter reading, background settlement, remote control of closing valve and alarming, etc.

What have been described above are only preferred embodiments of the present disclosure; however, the protection scope of the present disclosure is not limited thereto and is defined by the appended claims.

## Claims

1. A user-oriented energy utilization integrated management system, comprising: a user home LAN (300) and a background analysis master station (100), wherein data interaction and transmission between the user home LAN (300) and the background analysis master station (100) are carried out via a remote transmission network; the user home LAN (300) comprises a sensing device for data collection (310), energy-using equipment (320), an energy metering device (330), and a control and management device (350) for controlling and managing household appliances; wherein:
the energy metering device (330) is adapted to perform collecting and metering of household energy-usage information;
the control and management device (350) is configured for regulating and controlling the energy-using equipment (320) and transmitting data information collected by the energy metering device (330) to the background analysis master station (100); and
the background analysis master station (100) is adapted to analyse and integrate the data and to return an analysis result to the control and management device (350), such that the control and management device (350) is adapted to perform control and management of a plurality of energy-using equipment (320) based on the analysis result of the background analysis master station (100)
**characterized in that**
the control and management device (350) comprises an energy-usage switching module (340) that is adapted to switch energy input based on the analysis result of the background analysis master station (100),
wherein a user household has a coal-energy input end, a gas-energy input end, and an electricity-energy input end, wherein the energy-usage switching module (340) is adapted to select one of the coal-energy input end, the gas-energy input end, or the electricity-energy input end to perform energy input based on the analysis result of the background analysis master station (100),
and wherein the background analysis master station (100) is further adapted for analyzing and integrating gas-usage amount and electricity-usage amount and feeding back the analysis result to the control and management device.

2. The user-oriented energy utilization integrated management system according to claim 1, wherein the control and management device (350) comprises an energy-usage displaying module that is configured to display energy-usage information collected by the energy metering device (330) or is configured to display household energy-usage data based on the analysis result of the background analysis master station (100).

3. The user-oriented energy utilization integrated management system according to claim 1, wherein the control and management device (350) comprises a control module that is adapted to control a working mode of the energy-using equipment (320) based on the analysis result of the background analysis master station (100).

4. The user-oriented energy utilization integrated management system according to claim 1, wherein the control and management device (350) comprises a gateway module that is adapted to carry out data transmission between the user home LAN (300) and the background analysis master station (100).

5. The user-oriented energy utilization integrated management system according to claim 4, wherein the gateway module is adapted to transmit and receive data via GPRS, NB-IoT, or LoRa.

6. The user-oriented energy utilization integrated management system according to any one of claims 1∼5, wherein a communication between the energy-using equipment (320) and the control and management device (350) is established via one of a ZigBee communication module, a WM-Bus communication module, a home Wi-Fi, or the Bluetooth.

7. The user-oriented energy utilization integrated management system according to any one of claims 1~5, wherein the energy-using equipment (320) includes a distributed power generation device, an energy-storage device that stores energy, and an energy consumption device, wherein the energy-consumption device includes at least one of a TV set, an air-conditioner, a kitchen appliance, a washing machine, or a heating device, wherein the distributed power generation device or energy-storage device is configured to directly supply energy for the energy-consumption device.

8. The user-oriented energy utilization integrated management system according to any one of claims 1~5, wherein the energy metering device (330) includes at least one of a gas meter, an electric energy meter, a heat energy meter, or a water meter.

9. The user-oriented energy utilization integrated management system according to any one of claims 1~5, wherein the home LAN (300) further comprises an extended device (380), the extended device including an in-vehicle device.

## Patentansprüche

1. Benutzerorientiertes integriertes Energienutzungs-Managementsystem, umfassend: ein Benutzer-Heim-LAN (300) und eine Hintergrundanalyse-Hauptstation (100), wobei die Dateninteraktion und -übertragung zwischen dem Benutzer-Heim-LAN (300) und der Hintergrundanalyse-Hauptstation (100) über ein Fernübertragungsnetzwerk durchgeführt werden; wobei das Benutzer-Heim-LAN (300) eine Erfassungsvorrichtung zur Datenerfassung (310), eine energieverbrauchende Ausrüstung (320), eine Energiemessvorrichtung (330) und eine Steuer- und Verwaltungsvorrichtung (350) zur Steuerung und Verwaltung von Haushaltsgeräten umfasst; wobei:
die Energiemessvorrichtung (330) dazu ausgelegt ist, Informationen über den Energieverbrauch im Haushalt zu sammeln und zu messen;
die Steuer- und Verwaltungsvorrichtung (350) so konfiguriert ist, dass sie die energieverbrauchende Ausrüstung (320) regelt und steuert und die von der Energiemessvorrichtung (330) gesammelte Dateninformationen an die Hintergrundanalyse-Hauptstation (100) überträgt; und
die Hintergrundanalyse-Hauptstation (100) dazu ausgelegt ist, die Daten zu analysieren und zu integrieren und ein Analyseergebnis an die Steuer- und Verwaltungsvorrichtung (350) zurückzugeben, so dass die Steuer- und Verwaltungsvorrichtung (350) dazu ausgelegt ist, die Steuerung und Verwaltung einer Vielzahl von energieverbrauchenden Ausrüstung (320) basierend auf dem Analyseergebnis der Hintergrundanalyse-Hauptstation (100) durchzuführen,
**dadurch gekennzeichnet, dass**
die Steuer- und Verwaltungsvorrichtung (350) ein Modul (340) zum Umschalten des Energieverbrauchs umfasst, das dazu ausgelegt ist, die Energiezufuhr basierend auf dem Analyseergebnis der Hintergrundanalyse-Hauptstation (100) umzuschalten,
wobei ein Benutzerhaushalt eine Kohleenergie-Eingabeseite, eine Gasenergie-Eingabeseite und eine Elektrizitätsenergie-Eingabeseite hat, wobei das Modul (340) zum Umschalten des Energieverbrauchs angepasst ist, um eine von der Kohleenergie-Eingabeseite, der Gasenergie-Eingabeseite oder der Elektrizitätsenergie-Eingabeseite auszuwählen, um eine Energiezufuhr basierend auf dem Analyseergebnis der Hintergrundanalyse-Hauptstation (100) durchzuführen,
und wobei die Hintergrundanalyse-Hauptstation (100) ferner dazu ausgelegt ist, die Gasverbrauchsmenge und die Stromverbrauchsmenge zu analysieren und zu integrieren und das Analyseergebnis an die Steuer- und Verwaltungsvorrichtung zurückzusenden.

2. Benutzerorientiertes integriertes Energienutzungs-Managementsystem nach Anspruch 1, wobei die Steuer- und Verwaltungsvorrichtung (350) ein Modul zur Anzeige des Energieverbrauchs umfasst, das so konfiguriert ist, dass es Energieverbrauchsinformationen anzeigt, die von der Energiemessvorrichtung (330) erfasst werden, oder so konfiguriert ist, dass es Haushalts-Energieverbrauchsdaten basierend auf dem Analyseergebnis der Hintergrundanalyse-Hauptstation (100) anzeigt.

3. Benutzerorientiertes integriertes Energienutzungs-Managementsystem nach Anspruch 1, wobei die Steuer- und Verwaltungsvorrichtung (350) ein Steuermodul umfasst, das dazu geeignet ist, einen Arbeitsmodus der energieverbrauchenden Ausrüstung (320) basierend auf dem Analyseergebnis der Hintergrundanalyse-Hauptstation (100) zu steuern.

4. Benutzerorientiertes integriertes Energienutzungs-Managementsystem nach Anspruch 1, wobei die Steuer- und Verwaltungsvorrichtung (350) ein Gateway-Modul umfasst, das dazu geeignet ist, eine Datenübertragung zwischen dem Benutzer-Heim-LAN (300) und der Hintergrundanalyse-Masterstation (100) durchzuführen.

5. Benutzerorientiertes integriertes Energienutzungs-Managementsystem nach Anspruch 4, wobei das Gateway-Modul dazu geeignet ist, Daten über GPRS, NB-loT oder LoRa zu senden und zu empfangen.

6. Benutzerorientiertes integriertes Energienutzungs-Managementsystem nach einem der Ansprüche 1 bis 5, wobei eine Kommunikation zwischen der energieverbrauchenden Ausrüstung (320) und der Steuer- und Verwaltungsvorrichtung (350) über ein ZigBee-Kommunikationsmodul, ein WM-Bus-Kommunikationsmodul, ein Heim-Wi-Fi oder Bluetooth hergestellt wird.

7. Benutzerorientiertes integriertes Energienutzungs-Managementsystem nach einem der Ansprüche 1 bis 5, wobei die energieverbrauchende Ausrüstung (320) eine verteilte Stromerzeugungsvorrichtung, eine Energiespeichervorrichtung, die Energie speichert, und eine Energieverbrauchsvorrichtung umfasst, wobei die Energieverbrauchsvorrichtung mindestens eines der folgenden Geräte umfasst: ein Fernsehgerät, eine Klimaanlage, ein Küchengerät, eine Waschmaschine oder ein Heizgerät, wobei die verteilte Stromerzeugungsvorrichtung oder die Energiespeichervorrichtung so konfiguriert ist, dass sie direkt Energie für die Energieverbrauchsvorrichtung liefert.

8. eines der folgenden Geräte umfasst: ein Fernsehgerät, eine Klimaanlage, ein Küchengerät, eine Waschmaschine oder ein Heizgerät
8. Benutzerorientiertes integriertes Energienutzungs-Managementsystem nach einem der Ansprüche 1-5, wobei die Energiemessvorrichtung (330) mindestens eines der folgenden Geräte umfasst: ein Gaszähler, ein Stromzähler, ein Wärmeenergiezähler oder ein Wasserzähler.

9. Benutzerorientiertes integriertes Energienutzungs-Managementsystem nach einem der Ansprüche 1 bis 5, wobei das Benutzer-Heim-LAN (300) ferner ein erweitertes Gerät (380) umfasst, wobei das erweiterte Gerät ein fahrzeuginternes Gerät umfasst.

## Revendications

1. Système de gestion intégrée de l'utilisation d'énergie orienté vers l'utilisateur, comprenant : un réseau local domestique de l'utilisateur (300) et une station maîtresse d'analyse d'arrière-plan (100), dans lequel l'interaction et la transmission des données entre le réseau local domestique de l'utilisateur (300) et la station maîtresse d'analyse d'arrière-plan (100) s'effectuent par l'intermédiaire d'un réseau de transmission à distance ; le réseau local domestique de l'utilisateur (300) comprend un dispositif de détection pour la collecte de données (310), un équipement consommateur d'énergie (320), un dispositif de mesure d'énergie (330), et un dispositif de commande et de gestion (350) pour la commande et la gestion des appareils ménagers ; dans lequel :
le dispositif de mesure d'énergie (330) est adapté pour effectuer la collecte et la mesure des informations relatives à la consommation d'énergie des ménages ;
le dispositif de commande et de gestion (350) est configuré pour réguler et commander l'équipement consommateur d'énergie (320) et transmettre les informations recueillies par le dispositif de mesure d'énergie (330) à la station maîtresse d'analyse d'arrière-plan (100) ; et
la station maîtresse d'analyse d'arrière-plan (100) est conçue pour analyser et intégrer les données et pour renvoyer un résultat d'analyse au dispositif de commande et de gestion (350), de telle sorte que le dispositif de commande et de gestion (350) est adapté pour effectuer le commande et la gestion d'une pluralité d'équipements consommateurs d'énergie (320) sur la base du résultat d'analyse de la station maîtresse d'analyse d'arrière-plan (100)
**caractérisé en ce que**
le dispositif de commande et de gestion (350) comprend un module de commutation de l'utilisation d'énergie (340) qui est adapté pour commuter l'entrée d'énergie sur la base du résultat d'analyse de la station maîtresse d'analyse de l'arrière-plan (100),
dans lequel un ménage utilisateur a une extrémité d'entrée d'énergie de charbon, une extrémité d'entrée d'énergie de gaz et une extrémité d'entrée d'énergie d'électricité, dans lequel le module de commutation de l'utilisation d'énergie (340) est adapté pour sélectionner l'une parmi une extrémité d'entrée d'énergie de charbon, une extrémité d'entrée d'énergie de gaz ou une extrémité d'entrée d'énergie d'électricité pour effectuer l'entrée d'énergie sur la base du résultat d'analyse de la station maîtresse d'analyse de l'arrière-plan (100),
et dans lequel la station maîtresse d'analyse de l'arrière-plan (100) est en outre adaptée pour analyser et intégrer la consommation de gaz et la consommation d'électricité et renvoyer le résultat d'analyse au dispositif de commande et de gestion.

2. Système de gestion intégrée de l'utilisation d'énergie orienté vers l'utilisateur selon la revendication 1, dans lequel le dispositif de commande et de gestion (350) comprend un module d'affichage de la consommation d'énergie qui est configuré pour afficher les informations de consommation d'énergie collectées par le dispositif de mesure d'énergie (330) ou est configuré pour afficher les données de consommation d'énergie des ménages sur la base du résultat d'analyse de la station maîtresse d'analyse de l'arrière-plan (100).

3. Système de gestion intégrée de l'utilisation d'énergie orienté vers l'utilisateur selon la revendication 1, dans lequel le dispositif de commande et de gestion (350) comprend un module de commande qui est adapté pour commander un mode de fonctionnement de l'équipement consommateur d'énergie (320) sur la base du résultat d'analyse de la station maîtresse d'analyse de l'arrière-plan (100).

4. Système de gestion intégrée de l'utilisation d'énergie orienté vers l'utilisateur selon la revendication 1, dans lequel le dispositif de commande et de gestion (350) comprend un module passerelle qui est adapté pour effectuer la transmission de données entre le réseau local domestique de l'utilisateur (300) et la station maîtresse d'analyse de l'arrière-plan (100).

5. Système de gestion intégrée de l'utilisation d'énergie orienté vers l'utilisateur selon la revendication 4, dans lequel le module passerelle est adapté pour transmettre et recevoir des données par l'intermédiaire de GPRS, de NB-IoT ou de LoRa.

6. Système de gestion intégrée de l'utilisation d'énergie orienté vers l'utilisateur selon l'une quelconque des revendications 1~5, dans lequel une communication entre l'équipement consommateur d'énergie (320) et le dispositif de commande et de gestion (350) est établie par l'intermédiaire d'un parmi un module de communication ZigBee, un module de communication WM-Bus, un Wi-Fi domestique ou le Bluetooth.

7. Système de gestion intégrée de l'utilisation d'énergie orienté vers l'utilisateur selon l'une quelconque des revendications 1~5, dans lequel l'équipement consommateur d'énergie (320) comporte un dispositif de production d'énergie distribuée, un dispositif de stockage d'énergie qui stocke l'énergie, et un dispositif de consommation d'énergie, dans lequel le dispositif de consommation d'énergie comporte au moins l'un parmi un téléviseur, un climatiseur, un appareil de cuisine, une machine à laver, ou un dispositif de chauffage, dans lequel le dispositif de production d'énergie distribuée ou le dispositif de stockage d'énergie est configuré pour fournir directement de l'énergie pour le dispositif de consommation d'énergie.

8. Système de gestion intégrée de l'utilisation d'énergie orienté vers l'utilisateur selon l'une quelconque des revendications 1~5, dans lequel le dispositif de mesure d'énergie (330) comporte au moins l'un parmi un compteur de gaz, un compteur d'énergie électrique, un compteur d'énergie thermique ou un compteur d'eau.

9. Système de gestion intégrée de l'utilisation d'énergie orienté vers l'utilisateur selon l'une quelconque des revendications 1~5, dans lequel le réseau local domestique de l'utilisateur (300) comprend en outre un dispositif étendu (380), le dispositif étendu comportant un dispositif embarqué.
